(19) Europäisches Patentamt
European Patent Office
Office européen des brevets

(11) **EP 1 751 751 B1**

(12) **EUROPEAN PATENT SPECIFICATION**

(45) Date of publication and mention
of the grant of the patent:
**24.09.2008 Bulletin 2008/39**

(21) Application number: **05739832.3**

(22) Date of filing: **11.05.2005**

(51) Int Cl.:
*G11B 7/013* (2006.01)    *G11B 7/14* (2006.01)

(86) International application number:
**PCT/IB2005/051541**

(87) International publication number:
**WO 2005/112011 (24.11.2005 Gazette 2005/47)**

(54) **SPOT ABERRATIONS IN A TWO-DIMENSIONAL OPTICAL STORAGE SYSTEM**

PUNKTABWEICHUNGEN IN EINEM ZWEIDIMENSIONALEN OPTISCHEN SPEICHERSYSTEM

ABERRATIONS DES POINTS DANS UN SYSTEME DE STOCKAGE OPTIQUE BIDIMENSIONNEL

(84) Designated Contracting States:
**AT BE BG CH CY CZ DE DK EE ES FI FR GB GR HU IE IS IT LI LT LU MC NL PL PT RO SE SI SK TR**

(30) Priority: **13.05.2004 EP 04102106**

(43) Date of publication of application:
**14.02.2007 Bulletin 2007/07**

(73) Proprietor: **Koninklijke Philips Electronics N.V.
5621 BA Eindhoven (NL)**

(72) Inventors:
• **BRULS, Dominique, M.**
NL-5656 AA Eindhoven (NL)
• **VAN DER LEE, Alexander, M.**
NL-5656 AA Eindhoven (NL)
• **BUSCH, Christopher**
NL-5656 AA Eindhoven (NL)

(74) Representative: **Uittenbogaard, Frank
Philips
Intellectual Property & Standards
P.O. Box 220
5600 AE Eindhoven (NL)**

(56) References cited:
EP-A- 0 623 920          WO-A-03/083848
US-A- 5 808 986

• FAGOONEE L ET AL: "Nonlinear signal-processing model for signal generation in multilevel two-dimensional optical storage" OPTICS LETTERS, OPTICAL SOCIETY OF AMERICA, WASHINGTON, US, vol. 29, no. 4, 10 November 2003 (2003-11-10), pages 385-387, XP002277240 ISSN: 0146-9592
• MOINIAN A ET AL: "Linear channel model for multilevel two dimensional optical storage" PROCEEDINGS INTERNATIONAL SYMPOSIUM ON COMMUNICATION THEORY AND APPLICATIONS, 13 July 2003 (2003-07-13), pages 352-356, XP002277238

## Description

The invention relates generally to spot aberrations in a two-dimensional optical storage system and, more particularly, to a method and apparatus for determining the presence and extent of aberrations in an optical readout spot utilized in a two-dimensional optical storage system.

Optical data storage systems provide a means for storing large quantities of data on an optical record carrier, such as an optical disc. Storage capacities in digital optical recording systems have increased from 600 MB per disc in CD to 4.7 GB in DVD, and are likely to reach some 25GB for upcoming systems based on blue laser diodes. Data stored on an optical record carrier is accessed by focusing a laser beam onto the data layer of the disc and then detecting the reflected light beam. In one known system, data is permanently embedded as marks, such as pits, in the disc, and the data is detected as a change in reflectivity as the laser beam passes over the marks.

An optical disc, such as a compact disc (CD) is known as one type of information recording media. According to a standard recording format of the CD, a recording area of the CD comprises a lead-in area, a program area, and a lead-out area. These areas are arranged in that order in a direction from an inner periphery to an outer periphery of the disc. Index information, referred to as the table of contents (TOC) is recorded in the lead-in area. The TOC includes management information as a sub-code which is used for managing information recorded in the program area. For example, if main information recorded in the program area is information relating to a music tune, the management information may comprise the playing time of the tune. Information relating to the track number of the corresponding music tune may also be recorded in the program area. A lead-out code which indicates the end of the program area is recorded in the lead-out area. In some modes, each track may start with a pre-gap of, say, 2 seconds and 150 frames, and in this pre-gap there is no relevant user data.

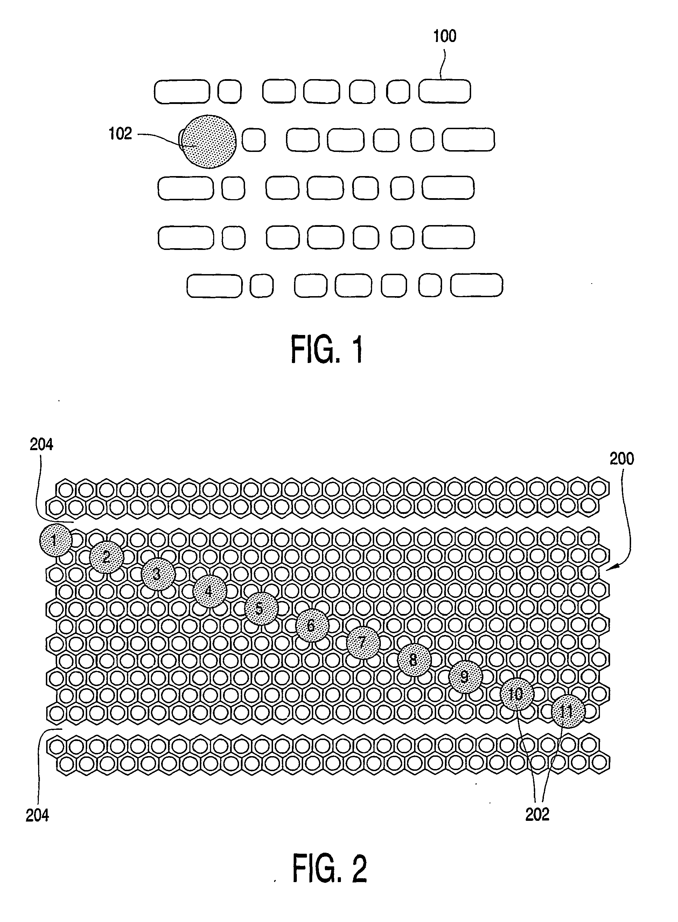

In order to read out or record data, it is necessary to position an optical spot onto the disc track. Referring to Figure 1 of the drawings, in existing optical systems, data is converted into a serial data stream that is recorded on a single track 100, with ample spacing between adjacent tracks so as to avoid inter-track interference. A single read-out spot 102 is provided and the signal is sampled along the track.

However, the spacing between tracks 100 limits attainable storage capacity, while the serial nature of the data in a one-dimensional optical storage system limits the attainable data throughput. As a result, the concept of two-dimensional optical storage (TwoDOS) has been developed, which is based on innovative two-dimensional channel coding and advanced signal processing, in combination with a read-channel consisting of a multi-spot light path realizing a parallel read-out. TwoDOS is expected to achieve a capacity of at least 50 GB for a 12cm disc, with a data rate of at least 300 Mb/s.

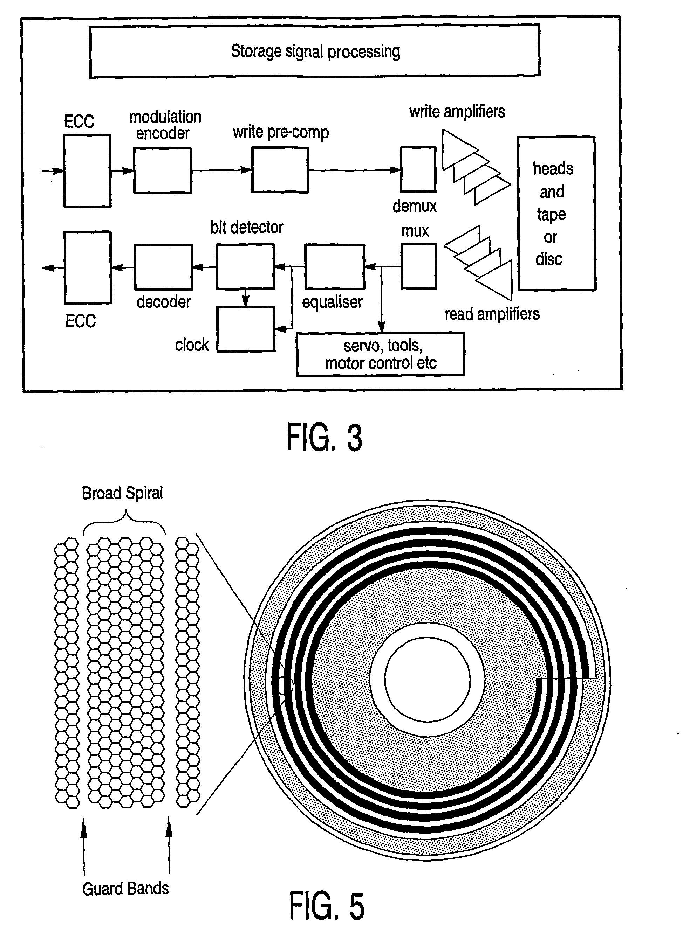

Referring to Figure 2 of the drawings, in general, the format of a TwoDOS disc is based on a broad spiral, in which the information is recorded in the form of two-dimensional features. Parallel read-out is realized using multiple light spots. These can be generated, for instance, by a single laser beam that passes through a grating and produces an array of laser spots 202. Other options include the use of a laser array or fibre optic arrangement, for example. The information is written in a 2D way, meaning that there is a phase relation between the different bit rows. In Figure 2, a honeycomb structure 200 is shown, and this can be encoded with a two-dimensional channel code, which facilitates bi-detection. As shown, the data is contained in a broad meta-track, which consists of several bit rows, wherein the broad meta-track is enclosed by a guard band 204 (i.e. a space containing no data). The array of spots 202 scans the full width of the broad spiral. The light from each laser spot is reflected by the two-dimensional pattern on the disc, and is detected on a photo-detector integrated circuit, which generates a number of high frequency waveforms. The resultant set of signal waveforms is used as the input to a two-dimensional signal processing unit, such as that illustrated schematically in Figure 3 of the drawings.

The parallelism of the above-described arrangement greatly increases attainable data throughputs and permits a smaller inter-track spacing between individual data tracks ($<\lambda/2NA$) than in conventional ID optical storage systems like CD, DVD and Blu-ray Disc, and it will be appreciated that all coding and signal processing operations need to account not only for temporal interaction between neighboring bits (i.e. inter-symbol interference), but also for their spatial (cross-track) spacing. Consequently, the entire recording system becomes fundamentally two-dimensional in nature.

Thus, in two-dimensional optical storage, the surface of the disc is scanned with an array of spots. In this way, the information of the bit rows is read out in parallel. As the diameter of the readout spot is larger than a single bit row within a meta-track, information from the adjacent bit rows is present in the resultant high frequency (HF) signal. Whereas this so-called inter-symbol interference (ISI) is considered to be noise in the case of one-dimensional storage, it is considered to be part of the signal in the 2D case and as such is used in the respective bit pattern reconstruction. If, however, the read-out spot contains aberrations (e.g. coma), proper retrieval of the 2D bit structure of the meta-track is hampered, as the spots may not only have different shapes, but the power distribution across the spot may also be different, i.e. highly inhomogeneous/asymmetric. This causes the ISI to be different to that assumed in respect of the algorithm used in the signal processing unit for bit detection.

WO03/083848 (of present applicant) forms the basis for the preamble of the independent claims and discloses a writing scheme for an optical recording medium in which, in order to compensate for aberration of an optical spot incident on the recording medium introduced by disc tilt or defocus, certain patterns of high spatial frequency are suppressed via the modulating coding.

US5808986 discloses a multiple beam optical memory system with solid-state lasers wherein tilt is automatically corrected by a two element focusing correction based on the astigmatic method, which introduces an aberration of a spot on the detector.

It is an object of the present invention to provide a method and apparatus for use in reading a multi-dimensionally encoded optical record carrier in which the presence and extent of spot aberrations is determined, such that it can be compensated for, as required.

In accordance with the present invention, there is provided apparatus for determining the presence and extent of aberrations in an optical spot used for scanning an optical record carrier in a multi-dimensional optical storage system, the apparatus comprising means for receiving and processing signals reflected back from bit patterns provided on said optical record carrier so as to reconstruct data represented thereby, **characterized in that,** in respect of one or more known bit patterns provided on said optical record carrier and selected such that the optical response thereof is characteristic of the shape of an optical spot incident thereon, the power of a signal received from a central bit and the residual power of signals received from bits adjacent said central bit are evaluated to determine the presence and extent of any aberration of an optical spot incident thereon.

EP0623920 discloses a multi-valued bit pattern optical recording method but does not disclose an optical aberration of a spot incident on the recording medium.

Also in accordance with the present invention, there is provided a method of determining the presence and extent of aberrations in an optical spot used for scanning an optical record carrier in a multi-dimensional optical storage system in which means are provided for receiving and processing signals reflected back from bit patterns provided on said optical record carrier so as to reconstruct data represented thereby, **characterized in that**, in respect of one or more known bit patterns provided on said optical record carrier and selected such that the optical response thereof is characteristic of the shape of an optical spot incident thereon, the power of a signal received from a central bit and the residual power of signals received from bits adjacent said central bit are evaluated to determine the presence and extent of any aberration of an optical spot incident thereon.

The present invention also extends to a method of reading or recording a multi-dimensionally encoded optical record carrier, the method comprising providing one or more optical spots for scanning said optical record carrier, and receiving and processing signals reflected back from bit patterns provided on said optical record carrier so as to reconstruct data represented thereby, **characterized in that**, in respect of one or more known bit patterns provided on said optical record carrier and selected such that the optical response thereof is characteristic of the shape of an optical spot incident thereon, the power of a signal received from a central bit and the residual power of signals received from bits adjacent said central bit are evaluated to determine the presence and extent of any aberration of an optical spot incident thereon.

The present invention extends still further to a multi-dimensional optical storage system for reading or recording an optical record carrier, the system comprising means for generating one or more optical spots for scanning said optical record carrier, and means for receiving and processing signals reflected back from bit patterns provided on said optical record carrier so as to reconstruct data represented thereby, **characterized in that,** in respect of one or more known bit patterns provided on said optical record carrier and selected such that the optical response thereof is characteristic of the shape of an optical spot incident thereon, the power of a signal received from a central bit and the residual power of signals received from bits adjacent said central bit are evaluated to determine the presence and extent of any aberration of an optical spot incident thereon.

Thus, in conventional optical storage, the data is arranged in a linear fashion and is read out by a single spot. In order to increase data rates and storage capacity, it has been proposed to arrange the data in an isotropic, hexagonal lattice and employ multiple spots for read-out. Due to the high bit-intensity, 2D inter-symbol interference (ISI) has a significant effect on bit detection. Aberrations in the readout spots can change the form of ISI and, therefore, hamper 2D bit detection. Thus, the present invention proposes a method and apparatus, wherein by evaluating the ISI of the readout spots by scanning over a known calibration pattern, i.e. a bit pattern selected such that its optical response is characteristic of the shape of the readout spot, the aberrations in the readout spot can be determined and beneficially compensated for, as required.

In one exemplary embodiment of the present invention, calibration bit patterns are provided on said optical record carrier for the purpose of determining the presence and extent of any aberration of an optical spot incident thereon, said calibration bit pattern being selected such that the optical response thereof is characteristic of the shape of an optical spot incident thereon. Beneficially, such a calibration bit pattern may be provided in a non user-data area of the optical record carrier, for example, the lead-in area. However, in principle at least, such a calibration bit pattern may be provided at any convenient location on the optical record carrier. In fact, in another exemplary embodiment, the calibration bit pattern may not be specifically provided for the purpose of determining the presence and extent of any aberration in an optical spot incident on the optical record carrier. Instead, a bit pattern already present on the optical record carrier may be used for this purpose, provided that the optical response thereof in respect of an optical spot incident thereon in which no aberration is present, has already been determined accurately.

In all cases, means may be provided such that, when the presence and extent of any aberration in an optical readout spot has been determined, such aberration can be compensated for (e.g. by adjusting the equalizer settings) or eliminated by making adjustments in the optical light path (using, for example, the tilt compensation mechanism).

The bit patterns used for the purpose of determining the presence and extent of any aberration in an optical spot incident thereon may be interleaved with user data.

In all cases, by evaluation of the power of the signal at a central bit and the residual power from the surrounding bits (ISI), the shape and local spatial power distribution of the spot can be determined and thus information about the aberrations present can be obtained.

The above-mentioned central and surrounding bits are beneficially in the form of a cluster, in which only a single pit is present.

These and other aspects of the present invention will be apparent from, and elucidated with reference to, the embodiment described herein.

An embodiment of the present invention will now be described by way of example only and with reference to the accompanying drawings, in which:

> Figure 1 is a schematic illustration of data storage in a one-dimensional optical storage arrangement;
> Figure 2 is a schematic illustration of data storage in a two-dimensional optical storage arrangement;
> Figure 3 is a schematic block diagram of a signal processing unit suitable for use in a two-dimensional optical storage arrangement;
> Figure 4 is a schematic block diagram illustrating typical coding and signal processing elements of a data storage system;
> Figure 5 is a schematic illustration of the manner in which data is recorded in a two-dimensional optical storage system;
> Figure 6a is a schematic representation of the hexagonal structure and the corresponding bits in a two-dimensional encoded optical record carrier;
> Figure 6b is a schematic representation illustrating two types of bilinear interference of wavefronts on a seven-bit hexagonal cluster in a two-dimensional encoded optical record carrier;
> Figure 7a is a schematic illustration of a bit cluster having an ideal readout spot, and Figures 7b and c schematically illustrate the same bit clusters having spots containing aberrations;
> Figure 8 is an implementation of a calibration area according to an exemplary embodiment of the present invention (it will be appreciated that this block can be repeated in the calibration area; it is also possible to make combinations of shuffled calibration blocks, which makes "probing" of all spots possible in exactly the same way, thereby enabling very precise determination of aberrations present in respect of every individual readout spot);
> Figure 9 illustrates schematically observed bit patterns, while scanning across row 0 and +/-2; pattern g is missing, but can be obtained from row +/-1 and +/-3;
> Figure 10 illustrates schematically observed bit patterns in row +/-4; and
> Figure 11 illustrates the concept whereby scanning the alignment pattern at various radial positions yields extra information about the spot profile.

Thus, a new concept for two-dimensional optical storage is being developed in which the information on the disc fundamentally has a two-dimensional character. The aim is to achieve an increase over the third generation of optical storage (Blu-ray Disc (BD) with wavelength $\lambda$=405 nm and a NA of 0.85) by a factor of 2 in data density and by a factor of 10 in data rate (for the same physical parameters of the optical readout system).

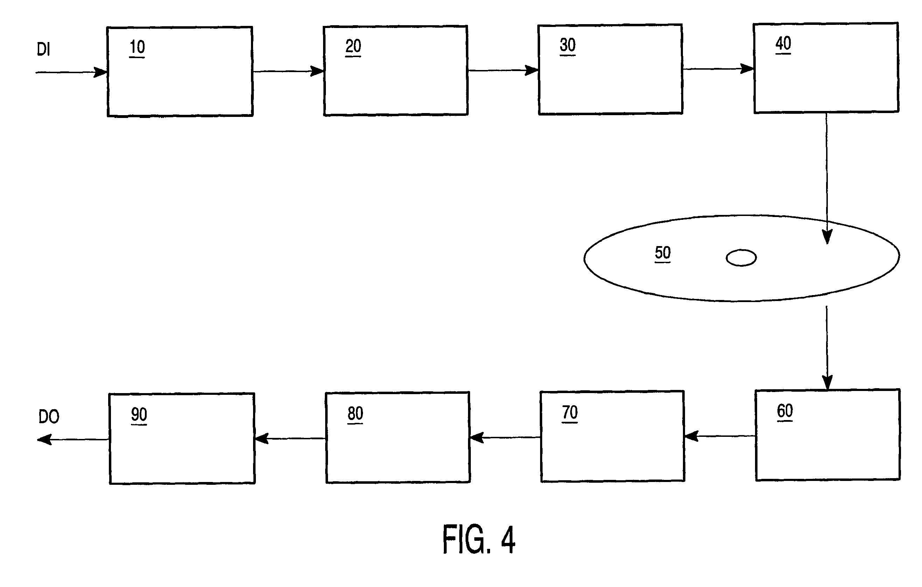

Figure 4 shows typical coding and signal processing elements of a data storage system. The cycle of user data from input DI to output DO can include interleaving 10, error-correction-code (ECC) and modulation encoding 20, 30, signal preprocessing 40, data storage on the recording medium 50, signal pick-up and post-processing 60, binary detection 70, and decoding 80, 90 of the interleaved ECC. The ECC encoder 20 adds redundancy to the data in order to provide protection from various noise sources. The ECC-encoded data are then passed on to a modulation encoder 30 which adapts the data to the channel, i.e. it manipulates the data into a form less likely to be corrupted by channel errors and more easily detected at the channel output. The modulated data, i.e. the channel bits, are then input to a writing or mastering device, e.g. a spatial light or electron beam modulator or the like, and stored on the recording medium 50, e.g. optical disc or card. On the receiving side, a reading device or pick-up unit comprising, for example, a partitioned photo-detector, or an array of detectors, which may be one-dimensional or even two-dimensional as in the charge coupled device (CCD), converts the received radiation pattern reflected from the recording medium 50 into pseudo-analog data values which must be transformed back into digital data (typically one bit per pixel for binary modulation, but $\log_2(M)$ bits per pixel for multi-level, or $M$-ary, modulation). Thus, the first step in this reading process is a detection and post-processing step 60 comprising an equalization step which attempts to undo distortions created in the recording process. The equalization step can be carried out in the pseudo-analog domain. Then the array of pseudo-analog values is converted to an array of binary digital data via a detector 70. The array of digital data is then passed first to the modulation decoder 80, which performs the inverse operation to modulation encoding, and then to an ECC decoder.

As explained above, in this new concept of two-dimensional optical storage, the bits are organized in a broad spiral. Such a spiral consists of a number of bit rows stacked one upon another with a fixed phase relation in the radial direction, such that the bits are arranged on a two-dimensional lattice. A two-dimensional closed-packed hexagonal ordering of the bits is chosen because it has a 15% higher packing fraction than the square lattice.

Successive revolutions of the broad spiral are separated by a guard band consisting of one empty bit row, as shown in Figure 5 of the drawings. A multi-spot light path for parallel readout is realized, where each spot has BD characteristics. Signal processing with equalization, timing recovery and bit detection is carried out in a two-dimensional fashion, i.e. jointly over all the bit rows within the broad spiral, as explained above.

Interpixel or intersymbol interference (ISI) is a phenomenon in which the signal waveform at one particular pixel is contaminated by data at nearby pixels. Physically, this arises from the band-limit of the (optical) channel, originating from optical diffraction, or from time-varying aberrations in the optical pick-up system, like disc tilt and defocus of the laser beam.

Furthermore, a characteristic feature of two-dimensional optical storage is that the distance of a bit to its nearest neighboring bits is identical for all (tangential and radial) directions. As a result, a problem known as "signal folding" may arise when the pit mark for a pit bit is assumed to cover the complete hexagonal bit cell. For a large contiguous pit area, consisting of a number of neighboring pit bits, there is no diffraction at all. Consequently, a large pit area and a large non-pit (or "land") area will show identical readout signals because they both act as perfect mirrors. In other words, the reflection signals from a large land portion, i.e. a mirror portion at zero-level (relative to the surface of the optical record carrier), and from a large pit portion, i.e. mirror portion below zero-level (e.g. at a depth of around or equal to $\lambda/4$, where $\lambda$ denotes the wavelength of the radiation used for reading, adapted for the index of refraction n of the material used for the substrate layer of the disc), are completely identical. As a result, the channel becomes highly non-linear, and a non-linear signal processing model for scalar diffraction has been developed in which the signal levels for all possible hexagonal clusters are calculated (see W.M.J. Coene, Nonlinear SignalProcessing Model for Scalar Diffraction in Optical Recording, 10 November 2003, Vol. 42, No. 32, APPLIED OPTICS):

$$I = 1 - \sum_i c_i b_i - 2 \sum_{i<j} d_{ij} b_i b_j$$

where $b_i$ is the bit value (0 or 1) indicating the presence of a pithole at site $I$, $c_i$ are the linear coefficients, and $d_{ij}$ are the nonlinear coefficients describing the signal response of the bit pattern on the disc.

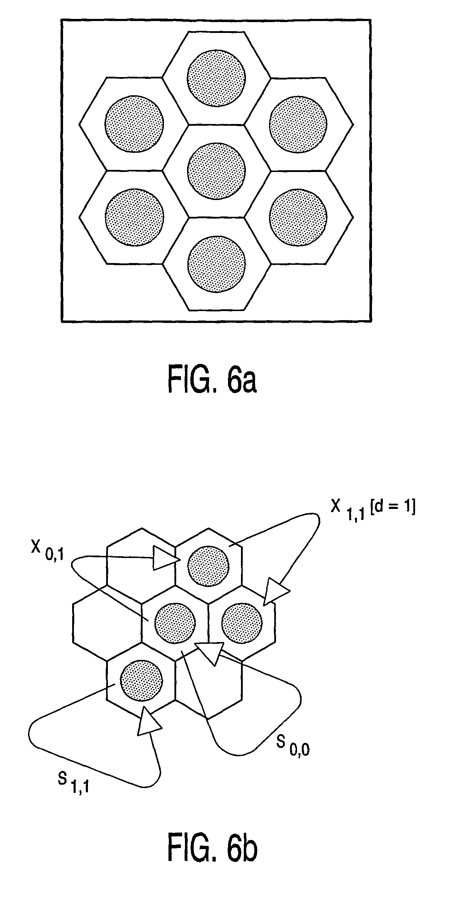

The above-mentioned signal processing model yields linear and bilinear terms. Among the bilinear terms, there are self-interference terms for each bit pit (close enough to the centre that the bit is within the area of the illuminating spot), and cross-interference terms for each bit pair (with both pit bits within the area of the illuminating spot). Thus, referring to Figure 6a of the drawings, a schematic representation is provided of the hexagonal structure and the corresponding bits. For the signal reconstruction, the bits close to the central bit are important. In the illustration, the nearest neighbors are shown. The central bit is labeled $b_0$ and the surrounding bits are labeled $b_1$ to $b_6$. With the help of the above-mentioned equation, the electric field on the disc can be reconstructed. Referring to Figure 6b of the drawings, two types of bilinear interference of wavefronts on the seven-bit hexagonal cluster are illustrated: self-interference $s_{0,0}$ and $s_{1,1}$, and cross-interference $x_{0,1}$ and $x_{1,1}$.

Signal deterioration caused by spot aberration is, of course, a known problem in 1D storage, and many methods for detecting and compensating for such aberrations have been proposed. What is different for 2D-based storage is that information is available both in the tangential and lateral direction (relative to the scanning direction), as explained above, whereas in standard methods, only the information relating to the tangential direction is collected. The extra information available in 2D-based storage, in principle, allows the complete reconstruction of the spot shape and, therefore, enables the provision of information relating to aberrations present, from the sampled signals, provided that the bit patterns themselves are known.

By placing known bit patterns in the lead-in, or at some other position on the information carrier, it is possible to determine the presence and extent of aberrations in the read-out spots. For known bit patterns, the (expected) HF response is also known and the inverse problem to reconstruct the original spot size and form can be solved.

It is important to note, that, in principle, this information can also be deducted from previously unknown data patterns, once these have been detected with sufficient accuracy. This form of permanent aberration tracking of course depends on the bit-detector already being able to relatively reliably identify bits before any compensation for the detected aberrations has taken place.

Therefore it is proposed to use (if desired) a double aberration detection loop. To bootstrap the procedure, whereby initial aberration detection with specific, known patterns takes place that is independent from working bit detection algorithms, and which provides information on spot aberrations present.

Then, the influence of the aberrations can be reduced either by (1) adjusting the algorithms for bit detection by taking the spot aberration into account (e.g.

adjusting the equalizer accordingly), or by (2) making adjustments in the optical light path to physically eliminate the aberrations (e.g. by a tilt compensator).

These calibration patterns can be either located only at a certain position on the data carrier but can also be interleaved with the real data patterns at a low frequency (to ensure automatic update and to enable a closed loop compensation).

When bit-detection with a sufficient accuracy is taking place, the second detection loop can be switched on, providing a continuous stream of information that can again be used either to adjust the equalizer or eliminate detected aberrations.

In practice, it is reasonable to assume that, in most cases, alignment of the optical set-up is sufficient to enable good bit detection without the need for an initial dedicated calibrations step, such that immediate use of the detected data patterns for aberration detection is possible.

Still, a nested procedure is required e.g. in the case of shocks, temperature effects, component aging, etc. Also, aberration detection by calibration patterns is simple, which is advantageous for a robust system.

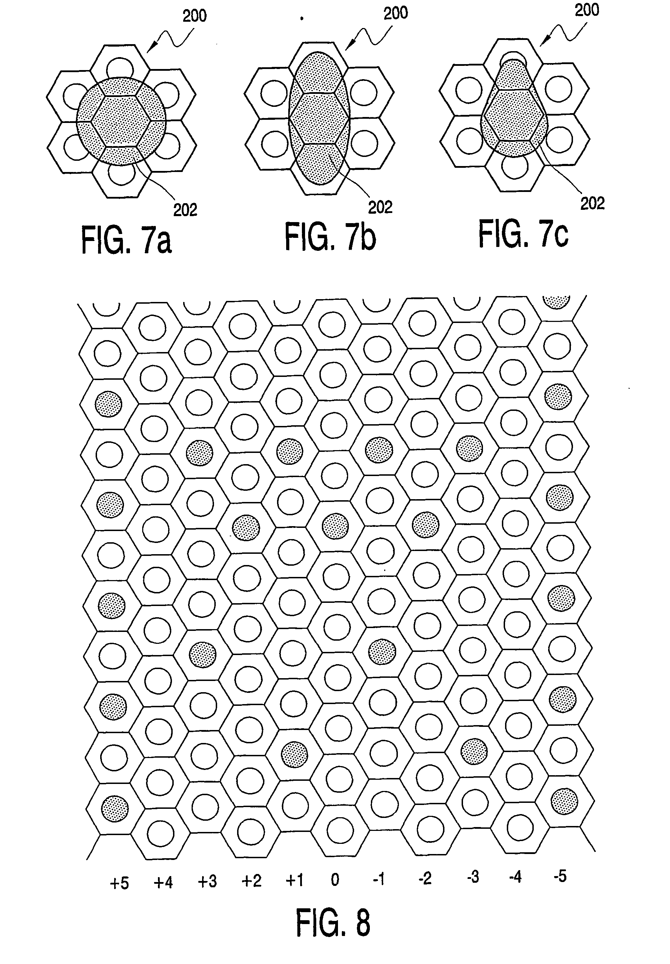

By evaluation of the power of the signal at the central bit 200a and the residual power coming from the surrounding bits 200b (ISI), the shape and local spatial power distribution of the spot 202 can be determined and thus information about the aberrations present can be obtained, as illustrated in Figures 7a, b and c.

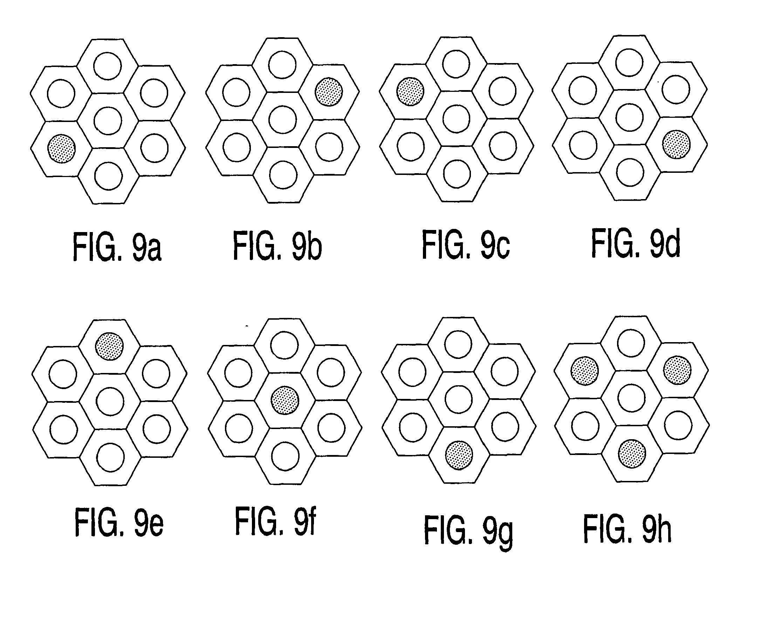

A possible implementation of a calibration bit pattern for use in an exemplary embodiment of the present invention is depicted in Figure 8. When scanning a spot across (from bottom to top) row 0 or +/-2 various bit configurations are probed, as shown in Figure 9. From these patterns it is possible to determine whether the spot is asymmetric (comma, astigmatism), see Figures 9a, b, c, d. Note that in the vertical direction, asymmetry cannot be determined, as one necessary bit configuration is missing, see Figure 9g. By extending the calibration block this could be solved, but this would lead to a large size increase of the calibration block. Instead, spots on row +/-1 or 3 can be used for this purpose (see Figure 8).

The "probing clusters" 9a-g are chosen such that only one pit is present per cluster, which suppresses the existence of non-linear cross-terms (originating from different bits within one cluster influencing each other) in the pulse-response. While this is not absolutely required, it is usually preferable to have a linear response, and thereby a simple method to construct e.g. error signals by superposition.

The response from the clusters gives information on the spot form, size and orientation, thereby providing everything that is required to generate error signals for aberration compensation or equalization correction.

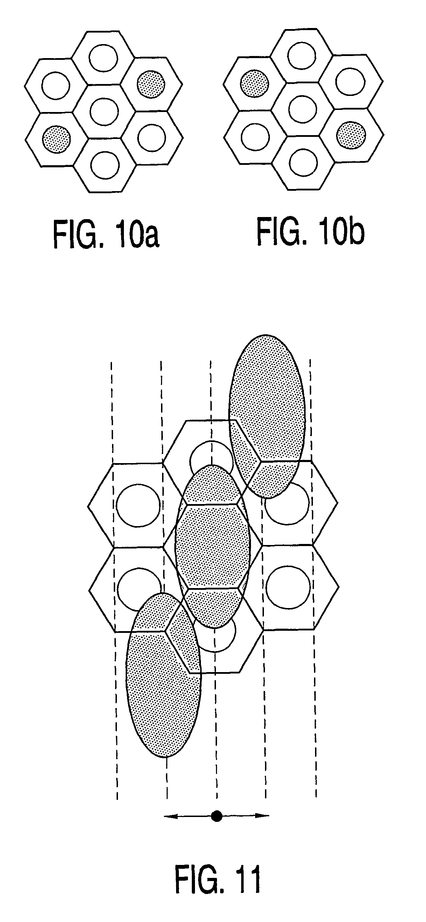

In order to obtain some information about aberration of the spots at the +4 and -4 rows, as well, the patterns illustrated as shown in Figures 10a and b can be used. Although the complete pulse response not obtained hereby, these patterns can be used as a "quick check".

In the outer +/-5 rows, enough pits are present to enable proper tracking (i.e. a DC free single-tone carrier).

Although clusters a-g in Figure 9 are sufficient to determine the spot form and size, also using a symmetric multiple-pit configuration as shown in Figure 9h is advantageous since its response is directly related to the overall spot size and thus e.g. spherical aberration.

The above-described calibration format is very fit to obtain general information about the global aberrations present.

Many variations of this implementation are possible, though, to extract even more information. E.g. one could be interested in whether the aberrations are the same for all spots since it is possible that the aberration of the outer spots can be larger than those of the inner spots. If one is interested in this, the proposed calibration block can be shuffled (in radial direction) over the meta-track, in order to do the same analysis of every individual row.

Only scanning (on track) across the calibration patterns may not yield a high enough accuracy in obtaining the local power distribution of the spot. Therefore it may be necessary to displace the spot/bit-row centres in radial direction as well as obtain the HF values for a number of "off-track" positions (Figure 11). Displaced spots other than the $0^{th}$ order can i.e. be achieved by rotating the grating. Alternatively, and probably preferably, the position of the mastered bit-rows on the carrier itself can be modulated. This should be done such that a) the guard bands that enable radial tracking are not affected (e.g. by keeping the outermost bit-rows' positions constant and modulating only the inner bit-rows), or by modulating the position of the whole meta-track at such a high spatial frequency that the limited bandwidth of the radial tracking set-up cannot follow.

From the HF signal reconstruction the spatial power and shape profile of the spot can then be obtained with a higher accuracy.

The implementation shown here, only contains $1^{st}$ shell approximations. However, for very high bit densities it may be advantageous to use the $2^{nd}$ shell as well.

In summary, and as will be appreciated by a person skilled in the art, the basic cluster channel response of a bit pattern for use in determination of the presence and extent of any aberration in an optical spot according to the invention, should be known. The ISI signal contribution thereof is not to be eliminated by subtraction, as it is in conventional one-dimensional optical storage, because as explained above, ISI can be advantageously used in 2D readout (TwoDOS) and is therefore treated as being part of the "signal" rather than "no ise".

The aim of the invention is to allow determination and classification of any aberrations present (e.g. comma, astigmatism, etc) in the optical spot, which would otherwise make read-out and bit-detection more difficult.

This is achieved, as described above, by providing patterns on the disc that are chosen such that their optical response is characteristic of the shape of the optical spot, thus enabling classification and quantification of spot aberrations. This information can then be used, for example, to either change the equalization settings for the signal processing or, more preferably, for the generation of an error signal which is actively fed back into a servo-loop that physically corrects the optical aberration present (for example, by adjusting the tilt of the objective lens used to focus the optical spot). If successfully applied, the present invention results in a read-out signal that contains all ISI resulting from the interfering disc patterns, but is free of negative influences caused by optical spot aberrations. On the contrary, prior art arrangements are known, such as those described in US Patent Nos. 5,657,308 and 5,808,988, in which the ISI contribution is eliminated.

The preferred patterns to achieve the object of the present invention, and which are proposed above, are fundamentally different to those proposed in the above-mentioned US Patent specifications, because the object of the invention described in these documents is fundamentally different to that of the present invention. The object in the prior art arrangements is to eliminate intersymbol interference, which is presumed to be linear, so in US Patent No. 5,808988, parameters are determined which characterize the interference between closely-packed pits, and learning patterns are deemed to be necessary due to variations in the disc that can influence the level of interference.

On the contrary, in order to achieve the object of the present invention, the use of pit patterns which contain direct neighbors is not ideal, and it is much preferred to choose bit patterns which cause little or no optical interference in the signal, but provide information relating to the shape of the optical spot.

It should be noted that the above-mentioned embodiment illustrates rather than limits the invention, and that those skilled in the art will be capable of designing many alternative embodiments within the scope of the invention as defined by the claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

**Claims**

1. A method of determining the presence and extent of aberrations in an optical spot (202) used for scanning an optical record carrier (50) in a multi-dimensional optical storage system in which means (60) are provided for receiving and processing signals reflected back from bit patterns (200) provided on said optical record carrier (50) so as to reconstruct data represented thereby, **characterized in that**, in respect of one or more known bit patterns provided on said optical record carrier (50) and selected such that the optical response thereof is characteristic of the shape of an optical spot (202) incident thereon, the power of a signal received from a central bit (200a) and the residual power of signals received from bits (200b) adjacent said central bit (200a) are evaluated to determine the presence and extent of any aberration of an optical spot (202) incident thereon.

2. A method according to claim 1, **characterized in that** data is recorded on said optical record carrier (50) in an isotropic substantially hexagonal lattice (200) and **in that** multiple optical spots (202) for read-out of said data are provided.

3. A method according to claim 1 or claim 2, **characterized in that** one or more calibration bit patterns are provided on said optical record carrier (50) for the purpose of determining the presence and extent of any aberration of an optical spot (202) incident thereon, said calibration bit pattern being selected such that the optical response thereof is characteristic of the shape of an optical spot (202) incident thereon.

4. A method according to claim 3, **characterized in that** said one or more calibration bit patterns are provided in a non user-data area of said optical record carrier (50).

5. A method according to claim 4, **characterized in that** said one or more calibration bit patterns are provided in a lead-in area of said optical record carrier (50).

6. A method according to claim 1 or claim 2, **characterized in that** said bit pattern selected such that the optical response thereof is characteristic of the optical spot incident thereon, forms part of the user data recorded on said optical record carrier (50).

7. A method according to any one of claims 1 to 5, **characterized in that** the bit pattern used for the purpose of determining the presence and extent of any aberration in an optical spot (202) incident thereon is interleaved with user data recorded on said optical carrier (50).

8. A method according to any one of claims 1 to 7, **characterized in that** by evaluation of the power of the signal at a central bit and the residual power from the surrounding bits, the shape and local spatial power distribution of the spot (202) is determined such that information about the aberrations present can be obtained.

9. A method according to any one of claims 1 to 8, **characterized in that** the central and surrounding bits of said bit pattern are in the form of a cluster, in which only a single pit is present.

10. Apparatus for determining the presence and extent of aberrations in an optical spot (202) used for scanning an optical record carrier (50) in a multi-dimensional optical storage system, the apparatus comprising means (60) for receiving and processing signals reflected back from bit patterns (200) provided on said optical record carrier (50) so as to reconstruct data represented thereby, **characterized in that**, in respect of one or more known bit patterns provided on said optical record carrier (50) and selected such that the optical response thereof is characteristic of the shape of an optical spot (202) incident thereon, the power of a signal received from a central bit (200a) and the residual power of signals received from bits (200b) adjacent said central bit (200a) are evaluated to determine the presence and extent of any aberration of an optical spot (202) incident thereon.

11. A method of reading or recording a multi-dimensionally encoded optical record carrier (50), the method comprising providing one or more optical spots (202) for scanning said optical record carrier (50), and receiving and processing signals reflected back from bit patterns (200) provided on said optical record carrier (50) so as to reconstruct data represented thereby, **characterized in that**, in respect of one or more known bit patterns provided on said optical record carrier (50) and selected such that the optical response thereof is characteristic of the shape of an optical spot (202) incident thereon, the power of a signal received from a central bit (200a) and the residual power of signals received from bits (200b) adjacent said central bit (200a) are evaluated to determine the presence and extent of any aberration of an optical spot (202) incident thereon.

12. A multi-dimensional optical storage system for reading or recording an optical record carrier (50), the system comprising means for generating one or more optical spots (202) for scanning said optical record carrier (50), and means (60) for receiving and processing signals reflected back from bit patterns provided on said optical record carrier (50) so as to reconstruct data represented thereby, **characterized in that**, in respect of one or more known bit patterns provided on said optical record carrier (50) and selected such that the optical response thereof is characteristic of the shape of an optical spot (202) incident thereon, the power of a signal received from a central bit (200a) and the residual power of signals received from bits (200b) adjacent said central bit (200a) are evaluated to determine the presence and extent of any aberration of an optical spot (202) incident thereon.

13. A system according to claim 12, **characterized in that it** comprises means for compensating for any aberrations determined to be present.

14. A system according to claim 13, **characterized in that it** comprises means for adjusting equalizer settings in order to compensate for any aberrations determined to be present.

15. A system according to claim 12, **characterized in that it** comprises means for substantially eliminating any aberrations determined to be present.

16. A system according to claim 15, **characterized in that it** comprises tilt compensation means for substantially eliminating any aberrations determined to be present.

**Patentansprüche**

1. Verfahren zum Ermitteln des Vorhandenseins und des Umfangs von Abweichungen in einem optischen Punkt (202), angewandt zum Abtasten eines optischen Aufzeichnungsträgers (50) in einem mehrdimensionalen optischen Speichersystem, in dem Mittel (60) vorgesehen sind zum Empfangen und Verarbeiten von Signalen, die von Bitmustern (200) reflektiert werden, die auf dem genannten optischen Aufzeichnungsträger (50) vorgesehen sind, und zwar zum rekonstruieren von Daten, die **dadurch** dargestellt werden, **dadurch gekennzeichnet, dass** in Bezug auf ein oder mehrere bekannte Bitmuster auf dem optischen Aufzeichnungsträger (50) und derart selektiert, dass die optische Antwort darauf kennzeichnend ist für die Form des optischen Punktes (202), der darauf trifft, wobei die Leistung eines von einem zentralen Bit (200a) empfangenen Signals und die Restleistung von Signalen, die von Bits (200b) empfangen werden, die an das genannte zentrale Bit (200a) grenzen, bewertet werden, und zwar zum Ermitteln des Vorhandenseins und des Umfangs etwaiger Abweichungen eines darauf auftreffenden optischen Punktes (202).

2. Verfahren nach Anspruch 1, **dadurch gekennzeichnet, dass** Daten auf dem genannten optischen Aufzeichnungsträger (50) in einer isotropen, im Wesentlichen hexagonalen Gitter (200) aufgezeichnet werden und dass mehrere optische Punkte (202) zum Auslesen der genannten Daten vorgesehen sind.

3. Verfahren nach Anspruch 1 oder 2, **dadurch gekennzeichnet, dass** eine oder mehrere Kalibrierungsbitmuster auf dem genannten optischen Aufzeichnungsträger (50) vorgesehen sind, und zwar zum Ermitteln des Vorhandenseins und des Umfangs etwaiger Abweichungen eines darauf auftreffenden optischen Punktes (202), wobei das genannte Kalibrierungsbitmuster derart selektiert wird, dass die optische Antwort für die Form eines darauf auftreffenden optischen Punktes (202) kennzeichnend ist.

4. Verfahren nach Anspruch 3, **dadurch gekennzeichnet, dass** das genannte eine oder mehrere Kalibrierungsbitmuster in einem Nichtbenutzerdatengebiet des genannten optischen Aufzeichnungsträgers (50) vorgesehen sind.

5. Verfahren nach Anspruch 4, **dadurch gekennzeichnet, dass** das genannte eine oder mehrere Kalibrierungsbitmuster in einem Einlaufgebiet des genannten optischen Aufzeichnungsträgers (50) vorgesehen sind.

6. Verfahren nach Anspruch 1 oder 2, **dadurch gekennzeichnet, dass** das genannte Bitmuster, das derart selektiert ist, dass die optische Antwort darauf für den darauf auftreffenden optischen Punkt kennzeichnend ist, einen Teil der auf dem genannten optischen Aufzeichnungsträger (50) aufgezeichneten Benutzerdaten bildet.

7. Verfahren nach Anspruch 1 bis 5, **dadurch gekennzeichnet, dass** das zum Ermitteln des Vorhandenseins und des Umfangs etwaiger Abweichungen in einem darauf auftreffenden optischen Punkt (202) benutzte Bitmuster mit auf dem genannten optischen Aufzeichnungsträger (50) aufgezeichneten Benutzerdaten verschachtelt ist.

8. Verfahren nach einem der Ansprüche 1 bis 7, **dadurch gekennzeichnet, dass** durch Bewertung der Leistung des Signals bei dem zentralen Bit und der Restleistung aus den umgebenden Bits die Form und die örtliche räumliche Leistungsverteilung des Punktes (202) derart ermittelt wird, dass Information über die anwesenden Abweichungen erhalten werden kann.

9. Verfahren nach einem der Ansprüche 1 bis 8, **dadurch gekennzeichnet, dass** das zentrale Bit und die umgebenden Bits des genannten Bitmuster in Form eines Clusters sind, wobei mit ein einziges Pit vorhanden ist.

10. Anordnung zum Ermitteln des Vorhandenseins und des Umfangs von Abweichungen in einem optischen Punkt (202), verwendet zum Abtasten eines optischen Aufzeichnungsträgers (50) in einem mehrdimensionalen optischen Speichersystem, wobei die Anordnung Mittel (60) aufweist zum Empfangen und Verarbeiten von Signalen, die von Bitmustern (200) auf dem optischen Aufzeichnungsträger (50) reflektiert werden, und zwar zum Rekonstruieren **dadurch** dargestellter Daten, **dadurch gekennzeichnet, dass** in Bezug auf ein oder mehrere bekannte Bitmuster auf dem genannten optischen Aufzeichnungsträger (50) und derart selektiert, dass die optische Antwort darauf für die Form eines darauf auftreffenden optischen Punktes (202) kennzeichnend ist, die Leistung eines von einem zentralen Bit (200a) empfangenen Signals und die Restleistung von Signalen, die von Bits (200b) empfangen wurden, die an das zentrale Bit (200a) grenzen, bewertet werden um das Vorhandensein und den Umfang etwaiger Abweichungen eines darauf auftreffenden optischen Punktes (202) zu ermitteln.

11. Verfahren zum Auslesen oder Aufzeichnen eines mehrdimensionalen codierten optischen Aufzeichnungsträgers (50), wobei das Verfahren das Schaffen eines oder mehrerer optischer Punkte (202) zum Abtasten des genannten optischen Aufzeichnungsträgers (50) umfasst, sowie das Empfangen und verarbeiten von Signalen, die von Bitmustern (200) auf dem genannten optischen Aufzeichnungsträger (50) reflektiert werden, und zwar zum Rekonstruieren **dadurch** wiedergegebener Daten, **dadurch gekennzeichnet, dass** in Bezug auf ein oder mehrere bekannte Bitmuster auf dem genannten optischen Aufzeichnungsträger (50) und derart selektiert, dass die optische Antwort darauf für die Form eines darauf auftreffenden optischen Punktes (202) kennzeichnend ist, wobei die Leistung eines von einem zentralen Bit (200a) empfangenen Signal und die Restleistung von Signalen, die von Bits (200b) grenzend an das zentrale Bit (200a) empfangen werden, werden bewertet, und zwar zum Ermitteln des Vorhandenseins und des Umfangs von Abweichungen eines darauf auftreffenden optischen Punktes (202).

12. Mehrdimensionales optisches Speichersystem zum Auslesen oder Aufzeichnen eines optischen Aufzeichnungsträgers (50), wobei das System Mittel aufweist zum Erzeugen eines oder mehrerer optischer Punkte (202) zum Abtasten des genannten optischen Aufzeichnungsträges (50), sowie Mittel (60) zum Empfangen und verarbeiten von Signalen, die von Bitmustern auf dem genannten optischen Aufzeichnungsträger (50) reflektiert werden, und zwar zum Rekonstruieren **dadurch** wiedergegebener Daten, **dadurch gekennzeichnet, dass** in Bezug auf ein oder mehrere bekannte Bitmuster auf dem genannten optischen Aufzeichnungsträger (50) und derart selektiert, dass die optische Antwort darauf für die Form eines optischen darauf auftreffenden Punktes (202) kennzeichnend ist, wobei die Leistung eines von einem zentralen Bit (200a) empfangenen Signals und die Restleistung von Bits (200b) empfangener Signale, grenzend an das genannte zentrale Bit (200a) zum Ermitteln des Vorhandenseins und des Umfangs etwaiger Abweichungen eines darauf auftreffenden optischen Punktes (202) bewertet werden.

13. System nach Anspruch 12, **dadurch gekennzeichnet, dass** es Mittel aufweist zum Kompensieren etwaiger Abweichungen, die als anwesend ermittelt wurden.

14. System nach Anspruch 13, **dadurch gekennzeichnet, dass** es Mittel aufweist zum Regeln der Einstellungen des Equalizers, damit etwaige ermittelte Abweichungen kompensiert werden.

15. System nach Anspruch 12, **dadurch gekennzeichnet, dass** es Mittel aufweist um etwaige ermittelte Abweichungen im Wesentlichen zu eliminieren.

16. System nach Anspruch 15, **dadurch gekennzeichnet, dass** es Neigungskompensationsmittel aufweist um etwaige ermittelte Abweichungen im Wesentlichen zu eliminieren.


**Revendications**

1. Procédé de détermination de la présence et de l'étendue d'aberrations dans un spot optique (202) qui est utilisé pour balayer un support d'enregistrement optique (50) dans un système de stockage optique multidimensionnel dans lequel des moyens (60) sont prévus pour recevoir et pour traiter des signaux étant renvoyés à partir de configurations binaires (200) qui sont prévues sur ledit support d'enregistrement optique (50) de manière à reconstruire les données qui sont représentées de ce fait, **caractérisé en ce que,** en ce qui concerne une ou plusieurs configurations binaires connues qui sont prévues sur ledit support d'enregistrement optique (50) et qui sont sélectionnées de telle façon que la réponse optique de celles-ci soit caractéristique de la forme d'un spot optique (202) y étant incident, la puissance d'un signal qui est reçu d'un bit central (200a) et la puissance résiduelle de signaux qui sont reçus de bits (200b) étant adjacents audit bit central (200a) sont évaluées pour déterminer la présence et l'étendue d'une aberration quelconque d'un spot optique (202) qui y est incident.

2. Procédé selon la revendication 1, **caractérisé en ce que** les données sont enregistrées sur ledit support d'enregistrement optique (50) dans un réseau isotrope sensiblement hexagonal (200) et **en ce qu'**il est prévu des spots optiques multiples (202) pour la lecture desdites données.

3. Procédé selon la revendication 1 ou 2, **caractérisé en ce qu'**une ou plusieurs configurations binaires d'étalonnage sont appliquées sur ledit support d'enregistrement optique (50) afin de déterminer la présence et l'étendue d'une aberration quelconque d'un spot optique (202) qui y est incident, ladite configuration binaire d'étalonnage étant sélectionnée de telle façon que la réponse optique de celle-ci soit caractéristique de la forme d'un spot optique (202) qui y est incident.

4. Procédé selon la revendication 3, **caractérisé en ce que** ladite une ou lesdites plusieurs configurations binaires sont prévues dans une zone de données de non-utilisateur dudit support d'enregistrement optique (50).

5. Procédé selon la revendication 4, **caractérisé en ce que** ladite une ou lesdites plusieurs configurations binaires d'étalonnage sont prévues dans une zone d'entrée dudit support d'enregistrement optique (50).

6. Procédé selon la revendication 1 ou selon la revendication 2, **caractérisé en ce que** ladite configuration binaire qui est sélectionnée de telle façon que la réponse optique de celle-ci soit caractéristique du spot optique qui y est incident fait partie des données d'utilisateur qui sont enregistrées sur ledit support d'enregistrement optique (50).

7. Procédé selon l'une quelconque des revendications précédentes 1 à 5, **caractérisé en ce que** la configuration binaire qui est utilisée afin de déterminer la présence et l'étendue d'une aberration quelconque dans un spot optique (202) qui y est incident est entrelacée avec les données d'utilisateur qui sont enregistrées sur ledit support d'enregistrement optique (50).

8. Procédé selon l'une quelconque des revendications précédentes 1 à 7, **caractérisé en ce que,** par l'évaluation de la puissance du signal à l'endroit d'un bit central et de la puissance résiduelle en provenance des bits environnants, la forme et la distribution de puissance spatiale locale du spot (202) sont déterminées de telle façon que l'on puisse obtenir l'information relative aux aberrations qui sont présentes.

9. Procédé selon l'une quelconque des revendications précédentes 1 à 8, **caractérisé en ce que** les bits centraux et environnants de ladite configuration binaire sont sous la forme d'un groupe dans lequel un seul creux est présent.

10. Appareil de détermination de la présence et de l'étendue d'aberrations dans un spot optique (202) qui est utilisé pour balayer un support d'enregistrement optique (50) dans un système de stockage optique multidimensionnel, l'appareil comprenant des moyens (60) pour recevoir et pour traiter des signaux étant renvoyés à partir des configurations binaires (200) qui sont prévues sur ledit support d'enregistrement optique (50) de manière à reconstruire les données qui sont représentées de ce fait, **caractérisé en ce que,** en ce qui concerne une ou plusieurs configurations binaires connues qui sont prévues sur ledit support d'enregistrement optique (50) et qui sont sélectionnées de telle façon que la réponse optique de celles-ci soit caractéristique de la forme d'un spot optique (202) y étant incident, la puissance d'un signal qui est reçu d'un bit central (200a) et la puissance résiduelle de signaux qui sont reçus de bits (200b) étant adjacents audit bit central (200a) sont évaluées pour déterminer la présence et l'étendue d'une aberration quelconque d'un spot optique (202) qui y est incident.

11. Procédé de lecture ou d'enregistrement d'un support d'enregistrement optique à codage multidimensionnel (50), le procédé comprenant l'application d'un ou de plusieurs spots optiques (202) pour balayer ledit support d'enregistrement optique (50), et pour recevoir et pour traiter des signaux étant renvoyés à partir des configurations binaires (200) qui sont prévues sur ledit support d'enregistrement optique (50) de manière à reconstruire les données qui sont représentées de ce fait, **caractérisé en ce que,** en ce qui concerne une ou plusieurs configurations binaires connues qui sont prévues sur ledit support d'enregistrement optique (50) et qui sont sélectionnées de telle façon que la réponse optique de celles-ci soit caractéristique de la forme d'un spot optique (202) y étant incident, la puissance d'un signal qui est reçu d'un bit central (200a) et la puissance résiduelle de signaux qui sont reçus de bits (200b) étant adjacents audit bit central (200a) sont évaluées pour déterminer la présence et l'étendue d'une aberration quelconque d'un spot optique (202) qui y est incident.

12. Système de stockage optique multidimensionnel de lecture ou d'enregistrement d'un support d'enregistrement optique (50), le système comprenant des moyens pour générer un ou plusieurs spots optiques (202) pour balayer ledit support d'enregistrement optique (50), et des moyens (60) pour recevoir et pour traiter des signaux étant renvoyés à partir des configurations binaires qui sont prévues sur ledit support d'enregistrement optique (50) de manière à reconstruire les données qui sont représentées de ce fait, **caractérisé en ce que,** en ce qui concerne une ou plusieurs configurations binaires connues qui sont prévues sur ledit support d'enregistrement optique (50) et qui sont sélectionnées de telle façon que la réponse optique de celles-ci soit caractéristique de la forme d'un spot optique (202) y étant incident, la puissance d'un signal qui est reçu d'un bit central (200a) et la puissance résiduelle de signaux qui sont reçus de bits (200b) étant adjacents audit bit central (200a) sont évaluées pour déterminer la présence et l'étendue d'une aberration quelconque d'un spot optique (202) qui y est incident.

13. Système selon la revendication 12, **caractérisé en ce qu'**il comprend des moyens pour compenser des aberrations quelconques qui sont déterminées de manière à être présentes.

14. Système selon la revendication 13, **caractérisé en ce qu'**il comprend des moyens pour ajuster des réglages d'égaliseur afin de compenser des aberrations quelconques qui sont déterminées de manière à être présentes.

15. Système selon la revendication 12, **caractérisé en ce qu'**il comprend des moyens pour éliminer sensiblement des aberrations quelconques qui sont déterminées de manière à être présentes.

16. Système selon la revendication 15, **caractérisé en ce qu'**il comprend des moyens de compensation d'inclinaison pour éliminer sensiblement des aberrations quelconques qui sont déterminées de ma-nière à être présentes.

FIG. 1

FIG. 2

**FIG. 3**

Broad Spiral

Guard Bands

**FIG. 5**

FIG. 4

EP 1 751 751 B1

FIG. 6a

FIG. 6b

FIG. 7a     FIG. 7b     FIG. 7c

+5   +4   +3   +2   +1   0   -1   -2   -3   -4   -5

FIG. 8

FIG. 9a  FIG. 9b  FIG. 9c  FIG. 9d

FIG. 9e  FIG. 9f  FIG. 9g  FIG. 9h

FIG. 10a          FIG. 10b

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03083848 A
- US 5808986 A
- EP 0623920 A

- US 5657308 A
- US 5808988 A

**Non-patent literature cited in the description**

- **W.M.J. COENE.** Nonlinear SignalProcessing Model-for Scalar Diffraction in Optical Recording. *APPLIED OPTICS,* 10 November 2003, vol. 42 (32